# EUROPÄISCHE PATENTSCHRIFT

(11) **EP 1 282 500 B1**
(45) Veröffentlichungstag und Bekanntmachung des Hinweises auf die Patenterteilung: **08.12.2004**
(21) Anmeldenummer: 01960219.2
(22) Anmeldetag: 16.05.2001
(51) Int. Cl.: B29C 45/17, B29C 45/14, B21D 26/02

(54) **VERFAHREN UND VORRICHTUNG ZUR HERSTELLUNG EINES FORMTEILS AUS EINEM METALL-/KUNSTSTOFFVERBUND SOWIE VERWENDUNG DER VORRICHTUNG**
METHOD AND DEVICE FOR MAKING A CAST PART FROM A PLASTIC/METAL COMPOUND AND DEVICE USE
PROCEDE ET DISPOSITIF DE FABRICATION D'UNE PIECE MOULEE A PARTIR D'UN COMPOSE PLASTIQUE/METALLIQUE ET UTILISATION DUDIT DISPOSITIF

(30) Priorität: 17.05.2000 DE 10024224
(43) Veröffentlichungstag der Anmeldung: 12.02.2003
(73) Patentinhaber: Fraunhofer-Gesellschaft zur Förderung der angewandten Forschung e.V., 80686 München (DE)
(72) Erfinder: ZIEGLER, Lars, 73119 Zell u.A. (DE)
(86) Internationale Anmeldenummer: PCT/EP2001/005534
(87) Internationale Veröffentlichungsnummer: WO 2001/087568

(56) Entgegenhaltungen:
- EP-A- 0 867 334
- WO-A-00/67931
- DE-A- 4 014 963
- DE-A- 19 960 869
- PATENT ABSTRACTS OF JAPAN vol. 1996, no. 05, 31. Mai 1996 (1996-05-31) -& JP 08 001829 A (MIYAGAWA KASEI IND CO LTD), 9. Januar 1996 (1996-01-09)
- PATENT ABSTRACTS OF JAPAN vol. 1998, no. 04, 31. März 1998 (1998-03-31) -& JP 09 323335 A (KASAI KOGYO CO LTD), 16. Dezember 1997 (1997-12-16)

## Beschreibung

Die Erfindung betrifft ein Verfahren zum Innenhochdruckumformen von rohrförmigem Halbzeug aus Metall zu dem Formteil, indem das Halbzeug in ein wenigstens zweiteiliges Formwerkzeug mit einem der Außenkontur des Formteils entsprechenden Formraum eingelegt, das Formwerkzeug mit Ausnahme der offenen Stirnseiten des Halbzeugs geschlossen, das Halbzeug an seinen offenen Stirnseiten druckfest abgedichtet und von wenigstens einer Stirnseite mit einer durch Spritzgießen in das Halbzeug gedrückten Polymerschmelze unter hohem Druck in den Formraum eingeformt wird. Ferner betrifft die Erfindung eine Vorrichtung zum Innenhochdruckumformen von rohrförmigem Halbzeug aus Metall sowie die Verwendung einer solchen Vorrichtung.

In der Umformtechnik von Metallen gewinnt das Innenhochdruckumformen zunehmend an Bedeutung zur Herstellung nahtloser, hohler Formteile in einem einzigen oder mehreren aufeinanderfolgenden Umformvorgängen. Das Ausgangsmaterial ist im allgemeinen ein rohrförmiges Halbzeug mit grundsätzlich beliebigem Querschnitt und beliebiger Querschnittsform, das in ein hohles Formteil umgeformt wird. Das rohrförmige Halbzeug wird in ein zweiteiliges Formwerkzeug eingelegt, dessen Formraum der gewünschten Außenkontur des Formteils entspricht. Nach Schließen des Werkzeugs wird das rohrförmige Halbzeug an beiden Stirnseiten abgedichtet und über wenigstens eine Stirnseite ein Fluid unter hohem Druck aufgegeben und dadurch das Halbzeug "aufgeblasen", bis es die endgültige Kontur eingenommen hat. Hierbei wird mit Drücken zwischen 1000 und 4000 bar gearbeitet, wobei die Höhe des Drucks von den Umformradien, den Umformtiefen und der Wandstärke des Halbzeugs abhängig ist. Als Fluid wird üblicherweise eine Öl-/Wasser-Emulsion verwendet, die nach Abdichten des Halbzeugs eingepreßt wird, wobei der Durchmesser des Halbzeugs im Bereich der Abdichtung in der Regel erhalten bleibt. Nach dem Umformen und der Druckentlastung wird das Formwerkzeug geöffnet und das Formteil entnommen.

Mit diesem Verfahren lassen sich relativ verwickelte Formteile herstellen, die früher nur durch Tiefziehen oder Pressen zweier Formteilhälften oder mehrerer Formstücke und anschließendes Zusammenfügen derselben herstellbar waren. Als Beispiel seien in der Kfz-Technik Auspuffanlagen und deren Teile, hohle Rahmen oder Rahmenteile etc. genannt. Gleichermaßen wird das Verfahren aber auch bei anderen technischen Bauteilen eingesetzt, sofern sie in entsprechender Stückzahl zu fertigen sind.

Bei dem bekannten Verfahren ist von Nachteil, daß die verwendete Öl-/Wasser-Emulsion gewisse Umweltrisiken mit sich bringt. Am Arbeitsplatz einer solchen Umformanlage fällt zudem stets die Emulsion an, was mit entsprechenden Reinigungsarbeiten verbunden ist. Ferner muß die Emulsion laufend ergänzt oder gar ersetzt werden. Schließlich handelt es sich bei dem Verfahren um ein Kaltumformen, da das Umformfluid in der Regel mit Umgebungstemperatur oder wenig darüber eingesetzt wird und sich eine Temperatur im Bereich des Siedepunktes von Wasser verbietet.

Es ist ferner bekannt (DE 197 13 074 A1), als Fluid für das Innenhochdruckformen eine Polymerschmelze zu verwenden, die unter hohem Druck mittels eines Spritzgießaggregates in das Halbzeug gedrückt wird, das auf diese Weise in den von dem Formwerkzeug begrenzten Formraum eingeformt wird. Die Polymerschmelze verbleibt in dem Formteil als Kunststoff-Füllung. Dadurch soll insbesondere bei stabförmigen Stützkörpern mit geringer Wandstärke des metallischen Teils eine erhöhte Knickfestigkeit erreicht werden. Dieses Ziel wird allerdings nur mit einem erhöhten Materialeinsatz an Kunststoff erreicht.

Dokument WO 00/67931 offenbart ein Verfahren und eine Vorrichtung gemäß den Oberbegriffe der Ansprüche 1 und 13.

Der Erfindung liegt die Aufgabe zugrunde, das bekannte Verfahren und die bekannte Vorrichtung dahingehend weiterzuentwickeln, daß bei einem geringem Kunststoffbedarf eine vielfältige Gestaltung von Formteilen aus einem Metall-/Kunststoffverbund möglich ist.

Diese Aufgabe wird in verfahrenstechnischer Hinsicht dadurch gelöst, daß die Polymerschmelze nach dem Umformen des Halbzeugs zum Formteil mittels eines unter Druck zugeführten, gegenüber der Polymerschmelze inerten Fluids unter Bildung einer Polymer-Innenschicht an dem Formteil zumindest teilweise aus dem Formteil verdrängt wird.

Bei dem erfindungsgemäßen Verfahren wird als Umformfluid eine Polymerschmelze eingesetzt, die je nach Art des Polymers eine Temperatur zwischen 150 und 350°C aufweisen kann. Mit diesem Umformfluid wird die Umformtemperatur entsprechend angehoben, so daß -wie beim Warmformen- die Umformkräfte und damit der Wirkmediendruck entsprechend reduziert werden können. Schließlich wird das Innenhochdruckumformen gemäß der Erfindung mit einer in der Kunststofftechnologie bekannten Verfahrenstechnik, nämlich dem Spritzgießen, verwirklicht, so daß in verfahrenstechnischer Hinsicht keine neuen technischen Konzepte zu entwickeln sind.

Auf diese Weise lassen sich hohle oder bereichsweise hohle Formteile herstellen, die innenseitig kunststoffbeschichtet sind. In diesem Zusammenhang sind insbesondere medienführende Bauteile zu nennen, bei denen die Kunststoff-Innenbeschichtung als Korrosions- oder Verschleißschutz dient, wobei das Halbzeug aus einem weniger hochwertigen Metall bestehen kann. Es kann ferner ein Halbzeug mit geringerer Wandstärke eingesetzt und auf eine sehr dünne Endwandstärke umgeformt werden, da die Innenschicht für eine zusätzliche Stabilisierung sorgt. So lassen sich auf diese Weise Leichtbauteile mit dünner Metallhaut erzeugen. Wesentlich ist bei diesem Verfahren, daß das Umformfluid, nämlich die Polymerschmelze, unmittelbar in ein technisch funktionelles Teil, nämlich die Beschichtung, umgesetzt wird. Es geht insbesondere auch kein Fluid verloren, wie auch jegliche Entsorgung entfällt, da die überschüssige Polymerschmelze wiederverwendet werden kann. Gegenüber reinen, hochwertigen Spritzgußteilen aus Kunststoff können Kunststoffrezyklate verarbeitet werden. Gegenüber dem herkömmlichen Spritzgießen kann die Zykluszeit verkürzt werden, da das Formteil früher entformt werden kann.

Wird die Polymerschmelze sofort nach dem Umformen des Halbzeugs vollständig ausgeblasen, wird ein metallisches Formteil mit dünner Kunststoffhaut erhalten, wird sie hingegen zeitverzögert und nur teilweise ausgeblasen, erhält man ein Verbund-Formteil aus Metall mit dickerer Innenbeschichtung. Die Wandstärke der Innenbeschichtung läßt sich durch Außenkühlung des Formteils im Formwerkzeug und/oder durch Steuerung der Verweilzeit des Polymers bis zum Ausblasen steuern. Das ausgeblasene Polymer läßt sich wiederverwenden.

Vorzugsweise erfolgt das Ausblasen der Polymerschmelze mittels Gas oder Wasser, die zugleich zur Abkühlung des im Formteil für die Innenbeschichtung verbleibenden Polymeranteils dienen können.

Es kann in einer Variante vorgesehen sein, daß das Formwerkzeug beheizt wird, um ein zu schnelles Abkühlen der Polymerschmelze zu verhindern und die Vorteile eines Warmformens zu nutzen. Hierbei wird die Heiztemperatur so gesteuert, daß das Halbzeug keine höhere Temperatur als die Schmelztemperatur der Polymerschmelze annimmt. Ein solches Beheizen empfiehlt sich insbesondere zu Beginn eines Fertigungszyklus', während sich mit zunehmender Betriebsdauer am Formwerkzeug ohnehin erhöhte Temperaturen einstellen. Gleichwohl ist aufgrund der Metallhülle ein frühzeitiges Entformen möglich.

Das Einspritzen der Polymerschmelze wird vorzugsweise mittels eines herkömmlichen Spritzgießaggregates durchgeführt, wobei das Spritzmundstück des Spritzgießaggregates die offene Stirnseite des Halbzeugs unmittelbar abdichten kann.

Wenn die offene Stirnseite des Halbzeugs aufgrund des Nachziehens beim Umformen wandert, wird das Spritzgießaggregat entsprechend dem Umformfortschritt des Halbzeugs nachgeführt.

Zum Aufbau des Gegendrucks, wie auch zum Ausblasen der Polymerschmelze zur Herstellung von innenseitig beschichteten Formteilen kann wiederum ein herkömmliches Gas- oder Wasserinnendruckaggregat, wie es bei der Herstellung hohler Spritzgießteile aus Kunststoff verwendet wird (DE-Zeitschrift "Kunststoffe" 1999, 84, 86), eingesetzt werden.

Das erfindungsgemäße Verfahren kann dahingehend modifiziert werden, daß das rohrförmige Halbzeug mit wenigstens einer Durchbrechung versehen wird, die im Formwerkzeug von einem Schieber verschlossen wird, und daß nach dem Umformen des Halbzeugs beim Verdrängen der Polymerschmelze ein Teil derselben durch Zurückweichen des Schiebers in einen von diesem begrenzten Formraum im Formwerkzeug verdrängt wird.

Auf diese Weise wird gleichsam ein Teil der Schmelze auf die Außenseite des metallischen Formteils verdrängt und bildet dort einen aus Kunststoff bestehenden Teil der Außenkontur des Formteils. Der Kunststoff durchdringt also die metallische Außenhaut. Hierdurch können auf der metallischen Außenseite technische Funktionsteile aus Kunststoff gebildet werden, z.B. Rippen, Befestigungselemente für das Formteil und dergleichen.

Die Durchbrechungen können am Halbzeug vor dem Einlegen in das Formwerkzeug oder auch im Formwerkzeug durch spanende Bearbeitung mit Späneabsaugung erzeugt werden.

Stattdessen oder zusätzlich ist es möglich, daß das rohrförmige Halbzeug an wenigstens einer Stirnseite zumindest teilweise verschlossen wird und im Bereich des Verschlusses wenigstens eine Durchbrechung vorgesehen wird, die im Formwerkzeug von einem Schieber verschlossen wird, und daß nach dem Umformen des Halbzeugs beim Verdrängen der Polymerschmelze ein Teil derselben durch Zurückweichen des Schiebers in einen von diesem begrenzten Formraum des Formwerkzeugs verdrängt wird.

Mit dieser Verfahrensvariante lassen sich an den Stirnseiten des Formteils aus dem Metall-/Kunststoffverbund zusätzliche Formkonturen aus Kunststoff anformen, z.B. Teile von Steckverbindungen, kraftübertragende Mitnehmer, Teile eines Kunststoffanschlusses für das Formteil oder dergleichen.

Schließlich kann das erfindungsgemäße Verfahren dahingehend abgewandelt werden, daß das rohrförmige Halbzeug an wenigstens einer Stirnseite durch eine steuerbare Düse verschlossen wird, die während des Umformens in Schließstellung gehalten wird, und daß die Düse nach dem Umformen des Halbzeugs geöffnet und die Polymerschmelze beim Verdrängen aus dem Halbzeug durch die Düse in außerhalb des Formwerkzeugs angeordnete Formräume zur Bildung von Spritzgußteilen verdrängt wird.

Auf diese Weise läßt sich die aus dem Formteil verdrängte Polymerschmelze unmittelbar zu weiteren Spritzgießteilen aus Kunststoff verarbeiten. Die Polymerschmelze ist also einerseits Arbeitsmittel für das Innenhochdruckformen, andererseits Werkstoff zur Bildung von Formteilen.

Zur Lösung der Aufgabe in vorrichtungstechnischer Hinsicht geht die Erfindung aus von einer Vorrichtung zur Herstellung eines Formteils aus einem Metall-/Kunststoffverbund durch Innenhochdruckumformen von rohrförmigem Halbzeug aus Metall mittels eines Fluids zu dem Formteil, bestehend aus einem wenigstens zweiteiligen Formwerkzeug mit einem der Außenkontur des Formteils entsprechenden Formraum, das eingelegte Halbzeug an seinen offenen Stirnseiten verschließenden Abdichtungen und wenigstens einem an eine Stirnseite anschließbaren, eine Polymerschmelze in das Halbzeug drükkenden Spritzgießaggregat.

Eine solche Vorrichtung zeichnet sich erfindungsgemäß aus durch ein an eine offene Stirnseite des rohrförmigen Halbzeugs, gegebenenfalls die dem Spritzgießaggregat gegenüberliegende Stirnseite, anschließbares Druckaggregat zur Erzeugung eines Innendrucks zum Verdrängen der Polymerschmelze an die Innenwand des Halbzeugs während des Umformens, um metallische, hohle Formteile mit einer Kunststoff-Innenbeschichtung herzustellen:

Bezüglich der Vorteile einer solchen Vorrichtung kann auf das vorstehend beschriebene Verfahren verwiesen werden. Gegenüber dem herkömmlichen Spritzgießen hohler Kunststoffteile können die Zuhaltekräfte am Formwerkzeug reduziert werden.

Gemäß einer Ausführungsform der Erfindung weist das Spritzgießaggregat ein die offene Stirnseite des Halbzeugs abdichtendes Spritzmundstück auf und ist das Spritzgießaggregat vorzugsweise verfahrbar, um mit dem abdichtenden Spritzmundstück der Bewegung der offenen Stirnseite des Halbzeugs während des Umformens zu folgen.

Ferner kann das Formwerkzeug beheizt sein, um die in das Halbzeug eingepreßte Polymerschmelze nicht zu schnell abzukühlen und den Warmumformvorgang zu unterstützen.

Als Druckaggregat kommt insbesondere ein herkömmliches Gasoder Wasserinnendruckaggregat in Frage, wie es in der Kunststoffspritzqießtechnik zur Herstellung hohler Spritzgußteile eingesetzt wird und das im Rahmen der Erfindung zum Ausblasen der Polymerschmelze dient.

Die ausgeblasene Polymerschmelze kann in das Spritzgießaggregat zurückgeführt werden. Hierfür bieten sich Spritzgießaggregate mit verschiebbarer Extruderschnecke an. Nach dem Einspritzen der Polymerschmelze in das Halbzeug und dessen Umformung zum endgültigen Formteil kann die Extruderschnecke zurückgezogen und die ausgeblasene Polymerschmelze in den dadurch gebildeten Freiraum zurückgedrückt werden.

Gemäß einer anderen Ausführungsform ist vorgesehen, daß das Formwerkzeug außerhalb des vom Halbzeug eingenommenen Bereichs eine von dem Spritzmundstück beim Verfahren des Spritzaggregats freilegbare Formkavität zur Aufnahme der ausgeblasenen Polymerschmelze aufweist.

Bei dieser Ausführungsform wird nach dem Umformen das Spritzmundstück zurückgefahren und dadurch eine Formkavität freigelegt, in welche die Polymerschmelze ausgeblasen werden kann.

Statt einer solchen Formkavität zur Aufnahme der überschüssigen Polymerschmelze kann auch vorgesehen sein, daß das Formwerkzeug außerhalb des vom Halbzeug eingenommenen Bereichs eine von dem Spritzmundstück beim Verfahren des Spritzgießaggregats freilegbare Öffnung zum Ableiten der ausgeblasenen Polymerschmelze aufweist.

Bei beiden vorgenannten Ausführungsformen kann die Polymerschmelze bzw. das gegebenenfalls wieder erstarrte Polymer dem Spritzgießaggregat wieder zugeführt werden.

Gemäß einer weiteren Ausführungsform ist vorgesehen, daß das Formwerkzeug wenigstens einen von einem Schieber verschlossenen zusätzlichen Formraum aufweist, der mit einer im rohrförmigen Halbzeug vorgesehenen Durchbrechung korrespondiert und diese verschließt, und daß der Schieber nach dem Umformen des Halbzeugs den zusätzlichen Formraum für den Zutritt der Polymerschmelze freigibt.

Mit dieser Ausführung der Vorrichtung wird zumindest ein Teil der verdrängten Polymerschmelze zur Bildung von Formkonturen aus Kunststoff auf der Außenseite der metallischen Hülle des Formteils genutzt. In einer weiteren Variante ist die Vorrichtung so ausgebildet, daß das Formwerkzeug wenigstens einen mit der Stirnseite des Halbzeugs zusammenwirkenden Schieber aufweist, der mit einer Durchbrechung an der teilweise geschlossenen Stirnseite des Halbzeugs zusammenwirkt und einen zusätzlichen Formraum verschließt, und daß der Schieber nach dem Umformen des Halbzeugs den zusätzlichen Formraum für den Zutritt der Polymerschmelze freigibt.

Mit diese Variante können auch an der Stirnseite des Formteil zusätzliche Kunststoffkonturen ausgeformt werden.

Schließlich ist es möglich, daß im Formwerkzeug eine der teilweise verschlossenen Stirnwand des Halbzeugs zugeordnete Düse angeordnet ist, an die über Angußverteiler weitere Formräume angeschlossen sind, und daß die Düse nach dem Umformen des Halbzeugs für den Zutritt der verdrängten Polymerschmelze in die weiteren Formräume in die Öffnungsstellung bringbar ist, wodurch sich die zuvor als Arbeitsmittel dienende Polymerschmelze vollständig zur Bildung des Formteils und weiterer Kunststoff-Formstücke nutzen läßt.

Erfindungsgemäß wird die zuvor beschriebene Vorrichtung zur Herstellung von hohlen Formteilen aus Metall mit einer Innenbeschichtung aus Kunststoff verwendet.

Eine weitere Verwendung der Vorrichtung besteht in der Herstellung von Formteilen aus Metall mit einer Innenbeschichtung aus Kunststoff und das Formteil nach außen überragenden Kunststoffkonturen. Ferner läßt sich die Vorrichtung zur Herstellung von innenbeschichteten Formteilen aus Metall und weiterer beliebiger separater Spritzgußteile verwenden.

Die erfindungsgemäß hergestellten Formteile lassen sich als konstruktive Bauteile, insbesondere Leichtbauteile mit akustischen und/oder thermischen Isolationseigenschaften, als medienführende Teile mit gleichzeitigem Verschleißschutz im Fahrzeugbau, in der Raumfahrt, wie auch im Heizungs- und Sanitärbereich einsetzen. Sie können ferner an ihrer Außenseite Kunststoff-Anformungen für vielfältige technische Funktionen aufweisen.

Nachstehend ist die Erfindung anhand eines in der Zeichnung wiedergegebenen Ausführungsbeispiels einer Umformeinheit beschrieben. In der Zeichnung zeigen jeweils in einem schematischen Schnitt:
- Fig.1: eine erste Ausführung der Formeinheit in der Ausgangsposition in schematischer Darstellung;
- Fig.2: die Formeinheit gemäß Fig.1 während des Umformvorgangs;
- Fig.3: die Formeinheit gemäß Fig.1 nach dem Umformvorgang;
- Fig.4: eine der Fig.1 entsprechende Darstellung einer weiteren Ausführungsform der Vorrichtung in der Ausgangsposition;
- Fig.5: die Ausführungsform gemäß Fig.4 während des Umformvorgangs;
- Fig.6: die Ausführungsform gemäß Fig.4 am Ende des Umformvorgangs;
- Fig.7: eine der Fig.1 entsprechende Darstellung einer dritten Ausführungsform der Vorrichtung;
- Fig.8: die Ausführungsform gemäß Fig.7 während des Umformvorgangs;
- Fig.9: die Ausführungsform gemäß Fig.8 am Ende des Umformvorgangs;
- Fig.10: eine perspektivische Teilansicht eines Formteils mit Kunststoffrippen auf der Außenseite;
- Fig.11 a) bis c): verschiedene Ansichten eines Formteils mit außenseitig angeformten Befestigungselementen aus Kunststoff und
- Fig.12: eine perspektivische Ansicht eines Formteils mit stirnseitig angeformten Kunststoffelementen.

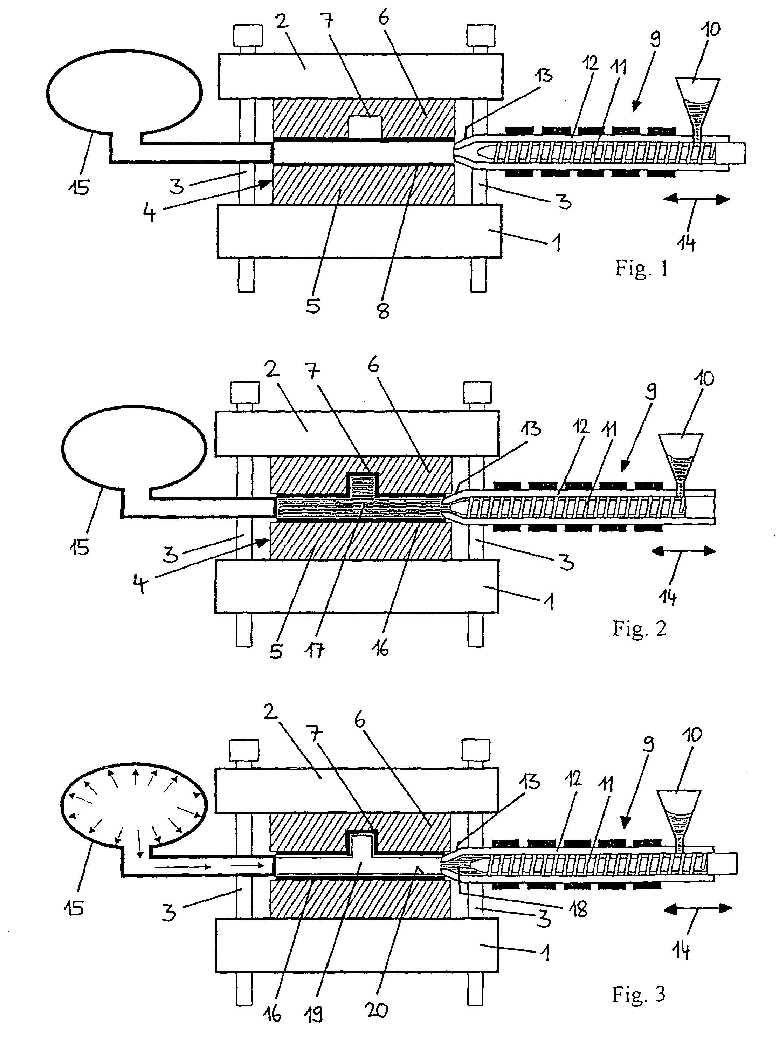

Die Formeinheit gemäß Fig.1 bis 9 weist einen Tisch 1, ein als Aufspannplatte 2 dienendes Querhaupt und die Druckkräfte vornehmlich aufnehmende Säulen 3 auf, die in einem nicht gezeigten Maschinenfundament sitzen. Ferner besitzt die Formeinheit bei den gezeigten Ausführungsbeispielen ein zweiteiliges Formwerkzeug 4, das aus einem mit dem Tisch 1 verbundenen Unterwerkzeug 5 und einem mit der Aufspannplatte 2 verbundenen Oberwerkzeug 6 besteht. Durch Verfahren der Aufspannplatte 2 mit dem Oberwerkzeug 6 läßt sich das Formwerkzeug 4 öffnen und schließen. Unterwerkzeug 5 und Oberwerkzeug 6 ergänzen einen insgesamt mit 7 bezeichneten Formraum, dessen Innenkontur der Außenkontur des zu erzeugenden Formteils entspricht.

In das geöffnete Formwerkzeug 4 wird das rohrförmige Halbzeug 8 aus Metall eingelegt. Zu diesem Zweck weisen Unterund Oberwerkzeug 5, 6 außerhalb des maßgeblichen Formraums zylindrische Abschnitte entsprechenden Querschnittes auf.

Zur Formeinheit gehört ferner ein herkömmliches Spritzgießaggregat 9, insbesondere eine handelsübliche Spritzgießmaschine. Sie weist einen Aufgabetrichter 10 und zwei parallele Extruderschnecken 11 auf, die in einem beheizten Gehäuse 12 umlaufen und axial verschiebbar sein können. Das Gehäuse endet in einem Spritzmundstück 13, durch das das über den Aufgabetrichter 10 beispielsweise als Granulat aufgegebene Polymer in Form einer Schmelze ausgedrückt wird.

Das Spritzgießaggregat 9 ist in Richtung des Doppelpfeils 14 verfahrbar und kann folglich mit seinem Spritzmundstück 13 an die in der Zeichnung rechts liegende offene Stirnseite des rohrförmigen Halbzeugs 8 angefahren und dichtend angepreßt werden.

An der gegenüberliegenden Stirnseite des rohrförmigen Halbzeugs 8 kann ein Druckaggregat dichtend angeschlossen werden, wie es beispielsweise vom Spritzgießen hohler Spritzgußteile her bekannt ist und das vorzugsweise mit Gasdruck arbeitet. Nach dem Abdichten beider Stirnseiten des Halbzeugs 8 wird über das Spritzgießaggregat 9 die Polymerschmelze eingeführt. Unter Wirkung des sich im Halbzeug 8 aufbauenden Drucks wird das Halbzeug in den Formraum 7 eingeformt, wobei die Polymerschmelze ihren Wärmeinhalt zumindest teilweise an das Halbzeug abgibt, dieses also erwärmt und selbst an dem relativ kalten Halbzeug erstarrt und eine Innenschicht bildet, während der Kern plastisch bleibt (Fig.2). Wenn sich das Halbzeug 8 beim Umformen verkürzt, wird das Spritzgießaggregat nachgefahren, um die Abdichtung an der anspritzseitigen Stirnseite aufrechtzuerhalten.

Nach dem Umformen des Halbzeugs wird mit dem Druckaggregat 15 der noch schmelzflüssige oder plastische Kern ausgeblasen, wie dies in Fig.3 gezeigt ist. Zu diesem Zweck kann die Extruderschnecke 11, wie ein Vergleich von Fig.2 und 3 zeigt, axial zurückgezogen werden, so daß im Extruder-Gehäuse 12 ein Freiraum 18 entsteht, der die überschüssige Schmelze wieder aufnimmt. Stattdessen kann die überschüssige Schmelze auch nach Abrücken des Spritzmundstücks bzw. des gesamten Spritzgießaggregates mittels des Gasinnendrukkaggregats über Angußkanäle in zusätzliche Formkavitäten, die außerhalb des Formwerkzeugs liegen, überführt werden.

In beiden vorgenannten Fällen wird ein hohles Formteil 19 mit einer Metallhülle 16 und einer Kunststoff-Innenbeschichtung 20 erhalten.

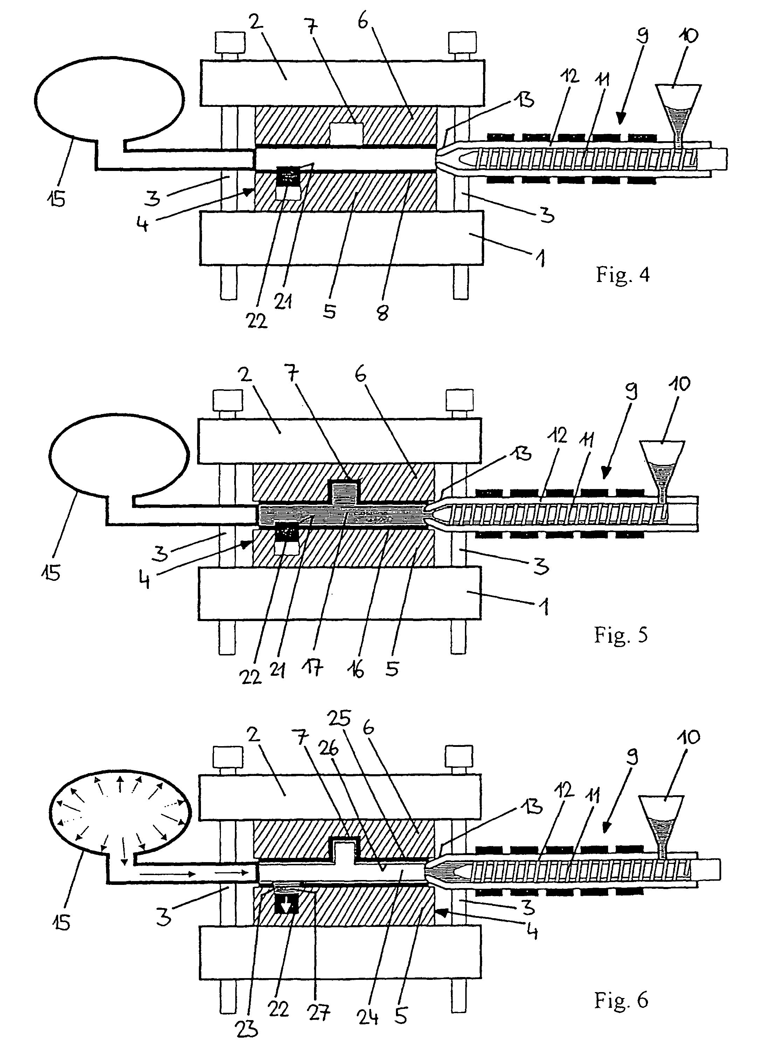

Das Ausführungsbeispiel gemäß Fig.4 bis 6 unterscheidet sich von dem der Fig.1 bis 3 nur dadurch, daß das rohrförmige Halbzeug 8 an seinem Umfang eine Durchbrechung 21 beliebigen Querschnitts aufweist, die vorzugsweise vor dem Einlegen in das Formwerkzeug 4 hergestellt worden ist. An der entsprechenden Stelle des Formwerkzeugs 4 ist ein Schieber angeordnet, der im Unterwerkzeug 5 etwa senkrecht zur Achse des rohrförmigen Halbzeugs geführt ist. Der Schieber 22 greift in die Durchbrechung 21 ein und schließt diese gegenüber dem Innenraum des Halbzeugs ab (Fig.4 und 5). Nach dem Einspritzen der Polymerschmelze (Fig.5) und unmittelbar vor der Druckbeaufschlagung aus dem Druckaggregat 15 wird der Schieber 22 in das Unterwerkzeug 5 eingefahren und gibt dann einen Formraum 23 frei, in den die Polymerschmelze eindringt. Es wird auf diese Weise ein Formteil 24 mit einer Metallhülle 25 und einer Kunststofffinnenbeschichtung 26 erhalten, das außenseitig eine Anformung 27 aus Kunststoff aufweist, die materialschlüssig mit der Innenbeschichtung 26 verbunden ist.

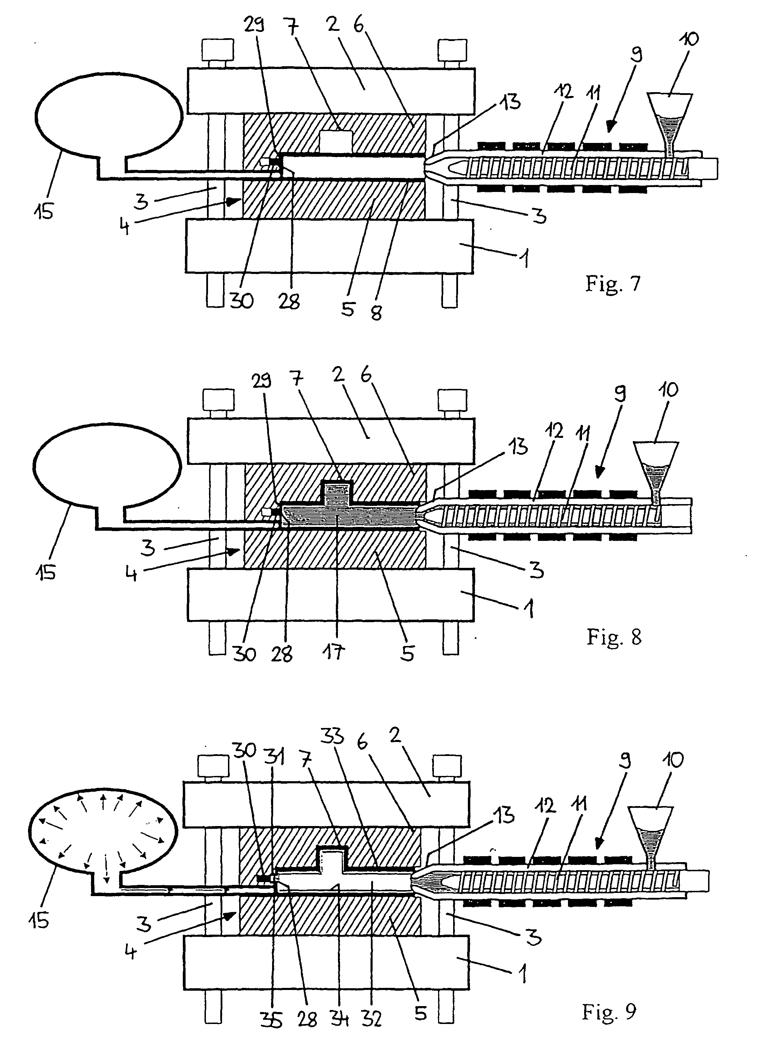

Der Aufbau und die Funktionsweise der in den Fig.7 bis 9 gezeigten Ausführungsformen weicht von der gemäß Fig.1 bis 3 nur dadurch ab, daß das rohrförmige Halbzeug 8 an seiner dem Spritzgießaggregat 9 gegenüberliegenden Stirnseite durch eine Wandung 28 verschlossen ist, die lediglich eine Öffnung für den Anschluß des Druckaggregats 15 und darüber eine Durchbrechung 29 aufweist, die vor dem Einlegen des Halbzeugs 8 in das Formwerkzeug 4 erzeugt worden ist. Die Durchbrechung 29 ist im Formwerkzeug 4 von einem Schieber 30 verschlossen, der im Oberwerkzeug 6 geführt ist (Fig.7). Der Schieber verbleibt beim Einspritzen der Polymerschmelze mittels des Spritzaggregates 9 in seiner Schließstellung. Während der Druckbeaufschlagung des Innenraums des Halbzeugs (Fig.9) wird der Schieber 30 zurückgezogen und gibt einen Formraum 31 frei, in den die Polymerschmelze eindringt. Das fertige Formteil 32 besteht aus einem Metallmantel 33 mit einer Kunststoff-Innenbeschichtung 34. Der Metallmantel 33 ist an der Stirnwand 28 im Bereich der Durchbrechung 29 von einer Kunststoffanformung 35 überragt, die mit der Innenbeschichtung des Formteils 32 materialschlüssig verbunden ist.

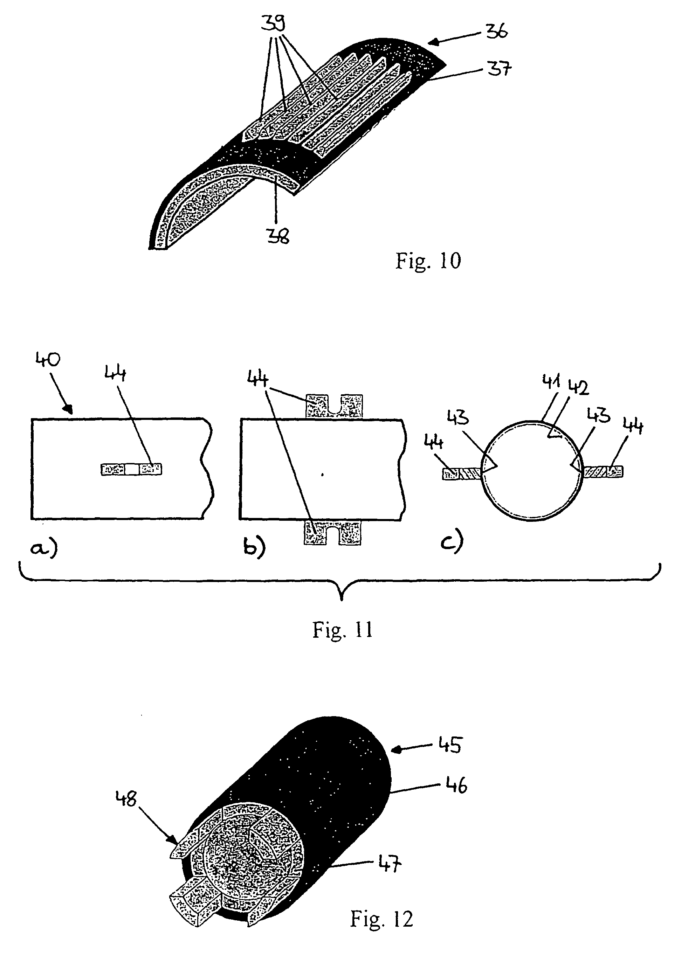

Fig.10 zeigt eine perspektivische Teilansicht eines Formteils, wie es etwa nach dem Verfahren gemäß Fig.4 bis 6 hergestellt werden kann. Es weist einen hohlen, rohrförmigen Grundkörper 36 aus einem Metallmantel 37 und einer Kunststoff-Innenbeschichtung 38 sowie an der Außenseite des Mantels 37 mehrere parallele Rippen 39 auf, die aus dem Kunststoff der Innenbeschichtung 38 bestehen und mit dieser über entsprechende schlitzförmige Durchbrechungen im Metallmantel 37 verbunden sind. Fig.11 zeigt in Seitenansicht a), Draufsicht b) und Stirnansicht c) ein hohles Formteil 40 mit einem rohrförmigen Metallmantel 41 und einer Innenbeschichtung 42. Der Metallmantel 41 weist an etwa diametral angeordneten Stellen Durchbrechungen 43 auf, durch die die Kunststoffmasse der Innenbeschichtung 42 nach außen gedrungen ist und dort Anformungen 44 bildet, die beispielsweise zur Befestigung des Formteils an anderen Bauteilen dienen und zugleich das Formteil elektrisch und thermisch isolieren.

Bei dem Ausführungsbeispiel gemäß Fig.12 weist das wiederum rohrförmige Formteil 45 einen Metallmantel 46 und eine Kunststoffinnenbeschichtung 47 sowie ein stirnseitig vorspringendes Profil 48 aus Kunststoff auf, das im vorliegenden Fall als eine Art Klauen- oder Steckkupplung ausgebildet ist. Dieses Formteil kann nach einem Verfahren hergestellt werden, wie es mit Bezug auf die Fig.7 bis 9 beschrieben worden ist.

## Patentansprüche

1. Verfahren zur Herstellung eines Formteils aus einem Metall-/Kunststoffverbund durch Innenhochdruckumformen von rohrförmigem Halbzeug aus Metall zu dem Formteil, indem das Halbzeug in ein wenigstens zweiteiliges Formwerkzeug mit einem der Außenkontur des Formteils entsprechenden Formraum eingelegt, das Formwerkzeug mit Ausnahme der offenen Stirnseiten des Halbzeugs geschlossen, das Halbzeug an seinen Stirnseiten druckfest abgedichtet und von wenigstens einer Stirnseite mit einer durch Spritzgießen in das Halbzeug gedrückten Polymerschmelze unter hohem Druck in den Formraum eingeformt wird, **dadurch gekennzeichnet, daß** die Polymerschmelze nach dem Umformen des Halbzeugs zum Formteil mittels eines gegenüber der Polymerschmelze inerten, unter Druck zugeführten Fluids unter Bildung einer Polymer-Innenschicht am Formteil zumindest teilweise aus dem Formteil verdrängt wird.

2. Verfahren nach Anspruch 1, **dadurch gekennzeichnet, daß** das Fluid nach Art der Gas- oder Wasserinnendrucktechnik zugeführt wird.

3. Verfahren nach einem der Ansprüche 1 oder 2, **dadurch gekennzeichnet, daß** das Formteil auf eine Temperatur unterhalb der Schmelztemperatur des Polymers abgekühlt und das Formteil aus dem Formwerkzeug entnommen wird.

4. Verfahren nach einem der Ansprüche 1 bis 3, **dadurch gekennzeichnet, daß** die Polymerschmelze mittels eines Fluids aus dem Formteil ausgeblasen wird.

5. Verfahren nach Anspruch 4, **dadurch gekennzeichnet, daß** die Polymerschmelze mittels Gas oder Wasser ausgeblasen wird.

6. Verfahren nach einem der Ansprüche 1 bis 5, **dadurch gekennzeichnet, daß** das Formwerkzeug beheizt wird.

7. Verfahren nach einem der Ansprüche 1 bis 6, **dadurch gekennzeichnet, daß** das Einspritzen der Polymerschmelze mittels eines herkömmlichen Spritzgießaggregates durchgeführt wird.

8. Verfahren nach Anspruch 7, **dadurch gekennzeichnet, daß** die offene Stirnseite des Halbzeugs mittels des Spritzmundstücks des Spritzgießaggregats abgedichtet wird.

9. Verfahren nach Anspruch 7 oder 8, **dadurch gekennzeichnet, daß** das Spritzgießaggregat während des Umformens entsprechend dem Umformfortschritt des Halbzeugs nachgeführt wird.

10. Verfahren nach einem der Ansprüche 1 bis 9, **dadurch gekennzeichnet, daß** das rohrförmige Halbzeug mit wenigstens einer Durchbrechung versehen wird, die im Formwerkzeug von einem Schieber verschlossen wird, und daß nach dem Umformen des Halbzeugs beim Verdrängen der Polymerschmelze ein Teil derselben durch Zurückweichen des Schiebers in einen von diesem begrenzten Formraum im Formwerkzeug verdrängt wird.

11. Verfahren nach einem der Ansprüche 1 bis 10, **dadurch gekennzeichnet, daß** das rohrförmige Halbzeug an wenigstens einer Stirnseite zumindest teilweise verschlossen wird und im Bereich des Verschlusses wenigstens eine Durchbrechung vorgesehen wird, die von einem Schieber verschlossen wird, und daß nach dem Umformen des Halbzeugs beim Verdrängen der Polymerschmelze ein Teil derselben durch Zurückweichen des Schiebers in einen von diesem begrenzten Formraum des Formwerkzeugs verdrängt wird.

12. Verfahren nach einem der Ansprüche 1 bis 11, **dadurch gekennzeichnet, daß** das rohrförmige Halbzeug an wenigstens einer Stirnseite durch eine steuerbare Düse verschlossen wird, die während des Umformens in Schließstellung gehalten wird, und daß die Düse nach dem Umformen des Halbzeugs geöffnet und die Polymerschmelze beim Verdrängen aus dem Halbzeug durch die Düse in außerhalb des Formwerkzeugs angeordnete Formräume zur Bildung von separaten Spritzgußteilen verdrängt wird.

13. Vorrichtung zur Herstellung eines Formteils aus einem Metall-/Kunststoffverbund durch Innenhochdruckumformen von rohrförmigem Halbzeug aus Metall zu dem Formteil, bestehend aus einem wenigstens zweiteiligen Formwerkzeug mit einem der Außenkontur des Formteils entsprechenden Formraum, das eingelegte Halbzeug an seinen offenen Stirnseiten verschließenden Abdichtungen und wenigstens einem an eine Stirnseite anschließbaren, eine Polymerschmelze in das Halbzeug drückenden Spritzgießaggregat, **gekennzeichnet durch** ein an eine offene Stirnseite des rohrförmigen Halbzeugs anschließbares Druckaggregat zur Erzeugung von Innendruck zum Verdrängen der Polymerschmelze an die Innenwand des Halbzeugs während des Umformens.

14. Vorrichtung nach Anspruch 13, **dadurch gekennzeichnet, daß** das Spritzgießaggregat ein die offene Stirnseite des Halbzeugs abdichtendes Spritzmundstück aufweist.

15. Vorrichtung nach Anspruch 13 oder 14, **dadurch gekennzeichnet, daß** das Spritzgießaggregat verfahrbar ist.

16. Vorrichtung nach einem der Ansprüche 13 bis 15, **dadurch gekennzeichnet, daß** das Spritzgießaggregat entsprechend dem Umformfortschritt des Halbzeugs nachführbar ist.

17. Vorrichtung nach einem der Ansprüche 13 bis 16, **dadurch gekennzeichnet, daß** das Formwerkzeug beheizt ist.

18. Vorrichtung nach einem der Ansprüche 13 bis 17, **dadurch gekennzeichnet, daß** das Druckaggregat ein herkömmliches Gas- oder Wasserinnendruckaggregat ist.

19. Vorrichtung nach einem der Ansprüche 13 bis 18, **dadurch gekennzeichnet, daß** das Druckaggregat an die dem Spritzgießaggregat gegenüberliegende offene Stirnseite des Halbzeugs dichtend angeschlossen ist.

20. Vorrichtung nach einem der Ansprüche 13 bis 19, **dadurch gekennzeichnet, daß** die überschüssige Polymerschmelze mittels des Druckaggregats in das Spritzgießaggregat rückführbar ist.

21. Vorrichtung nach Anspruch 20, **dadurch gekennzeichnet, daß** das Spritzgießaggregat eine verschiebbare Extruderschnecke aufweist.

22. Vorrichtung nach einem der Ansprüche 13 bis 21, **dadurch gekennzeichnet, daß** das Formwerkzeug außerhalb des vom Halbzeug eingenommenen Bereichs eine von dem Spritzmundstück beim Verfahren des Spritzaggregats freilegbare Formkavität zur Aufnahme der ausgeblasenen Polymerschmelze aufweist.

23. Vorrichtung nach einem der Ansprüche 13 bis 22, **dadurch gekennzeichnet, daß** das Formwerkzeug außerhalb des vom Halbzeug eingenommenen Bereichs eine von dem Spritzmundstück beim Verfahren des Spritzgießaggregats freilegbare Öffnung zum Ableiten der ausgeblasenen Polymerschmelze aufweist.

24. Vorrichtung nach einem der Ansprüche 13 bis 23, **dadurch gekennzeichnet, daß** das Formwerkzeug wenigstens einen von einem Schieber verschlossenen zusätzlichen Formraum aufweist, der mit einer im rohrförmigen Halbzeug vorgesehenen Durchbrechung korrespondiert und diese verschließt, und daß der Schieber nach dem Umformen des Halbzeugs den zusätzlichen Formraum für den Zutritt der Polymerschmelze freigibt.

25. Vorrichtung nach einem der Ansprüche 13 bis 24, **dadurch gekennzeichnet, daß** das Formwerkzeug wenigstens einen mit der Stirnseite des Halbzeugs zusammenwirkenden Schieber aufweist, der mit einer Durchbrechung an der teilweise geschlossenen Stirnseite des Halbzeugs zusammenwirkt und einen zusätzlichen Formraum verschließt, und daß der Schieber nach dem Umformen des Halbzeugs den zusätzlichen Formraum für den Zutritt der Polymerschmelze freigibt.

26. Vorrichtung nach einem der Ansprüche 13 bis 25, **dadurch gekennzeichnet, daß** im Formwerkzeug eine der teilweise verschlossenen Stirnwand des Halbzeugs zugeordnete Düse angeordnet ist, an die über Angußverteiler weitere Formräume angeschlossen sind, und daß die Düse nach dem Umformen des Halbzeugs für den Zutritt der verdrängten Polymerschmelze in die weiteren Formräume in die Öffnungsstellung bringbar ist.

27. Verwendung einer Vorrichtung nach einem der Ansprüche 13 bis 23 zur Herstellung von hohlen Formteilen aus Metall mit einer Innenbeschichtung aus Kunststoff.

28. Verwendung einer Vorrichtung nach Anspruch 24 oder 25 zur Herstellung von Formteilen aus Metall mit einer Innenbeschichtung und das Formteil nach außen überragenden Kunststoffkonturen.

29. Verwendung einer Vorrichtung nach Anspruch 26 zur Herstellung von Formteilen aus Metall mit einer Innenbeschichtung aus Kunststoff und weiterer separater Spritzgußteile.

## Claims

1. Method for producing a cast part made of a metal/plastic material composite by internal high pressure forming into the cast part of a tubular semi-finished product made of metal, in that the semi-finished product is inserted into an at least two-part form tool with a mould cavity corresponding to the outer contour of the cast part, the form tool is closed with the exception of the open end-sides of the semi-finished product, the semi-finished product is sealed in a pressure-resistant manner at its end-sides and is moulded in the mould cavity at high pressure from at least one end-side with a polymer melt pressed into the semi-finished product by injection moulding, **characterised in that** the polymer melt, after the semi-finished product has been formed into the cast part, is displaced from the cast part at least partially by means of a fluid, which is inert relative to the polymer melt and supplied under pressure, forming a polymer internal layer on the cast part.

2. Method according to claim 1, **characterised in that** the fluid is supplied in the manner of the gas or water internal pressure technique.

3. Method according to one of the claims 1 or 2, **characterised in that** the cast part is cooled to a temperature below the melting temperature of the polymer and the cast part is removed from the form tool.

4. Method according to one of the claims 1 to 3, **characterised in that** the polymer melt is blown out of the cast part by means of a fluid.

5. Method according to claim 4, **characterised in that** the polymer melt is blown out by means of gas or water.

6. Method according to one of the claims 1 to 5, **characterised in that** the form tool is heated.

7. Method according to one of the claims 1 to 6, **characterised in that** injection of the polymer melt is implemented by means of a conventional injection moulding unit.

8. Method according to claim 7, **characterised in that** the open end-side of the semi-finished product is sealed by means of the injection nozzle of the injection moulding unit.

9. Method according to claim 7 or 8, **characterised in that** the injection moulding unit correspondingly tracks the forming progress of the semi-finished product during forming.

10. Method according to one of the claims 1 to 9, **characterised in that** the tubular semi-finished product is provided with at least one opening which is sealed in the form tool by a slide, and **in that**, after forming the semi-finished product during displacement of the polymer melt, a part of the same is displaced by retracting the slide into a mould cavity in the form tool delimited by said slide.

11. Method according to one of the claims 1 to 10, **characterised in that** the tubular semi-finished product is sealed at least partially at at least one end-side and at least one opening is provided in the region of the seal, which opening is sealed by a slide, and **in that**, after forming the semi-finished product during displacement of the polymer melt, a part of the same is displaced by retracting the slide into a mould cavity of the mould tool delimited by said slide.

12. Method according to one of the claims 1 to 11, **characterised in that** the tubular semi-finished product is sealed at at least one end-side by a controllable nozzle which is kept in the closed position during forming, and **in that** the nozzle is opened after forming of the semi-finished product and, upon displacement from the semi-finished product, the polymer melt is displaced through the nozzle into mould cavities disposed outwith the form tool in order to form separate injection moulding parts.

13. Device for producing a cast part made of a metal/plastic material composite by internal high pressure forming into the cast part of a tubular semi-finished product made of metal, comprising an at least two-part form tool with a mould cavity corresponding to the outer contour of the cast part, seals sealing the inserted semi-finished product at its open end-sides and at least one injection moulding unit, which can be connected on one end-side and presses a polymer melt into the semi-finished product, **characterised by** a pressure unit, which can be connected to an open end-side of the tubular semi-finished product in order to generate internal pressure for displacing the polymer melt onto the internal wall of the semi-finished product during forming.

14. Device according to claim 13, **characterised in that** the injection moulding unit has an injection nozzle which seals the open end-side of the semi-finished product.

15. Device according to claim 13 or 14, **characterised in that** the injection moulding unit is moveable.

16. Device according to one of the claims 13 to 15, **characterised in that** the injection moulding unit can correspondingly track the forming progress of the semi-finished product.

17. Device according to one of the claims 13 to 16, **characterised in that** the form tool is heated.

18. Device according to one of the claims 13 to 17, **characterised in that** the pressure unit is a conventional gas or water internal pressure unit.

19. Device according to one of the claims 13 to 18, **characterised in that** the pressure unit is connected in a sealed manner to the open end-side of the form tool which is situated opposite the injection moulding unit.

20. Device according to one of the claims 13 to 19, **characterised in that** the excess polymer melt can be recirculated into the injection moulding unit by means of the pressure unit.

21. Device according to claim 20, **characterised in that** the injection moulding unit has a sealable extruder screw.

22. Device according to one of the claims 13 to 21, **characterised in that** the form tool has, outwith the region occupied by the semi-finished product, a mould cavity which can be exposed by the injection nozzle during movement of the injection moulding unit in order to receive the blown-out polymer melt.

23. Device according to one of the claims 13 to 22, **characterised in that** the form tool has, outwith the region occupied by the semi-finished product, an opening which can be exposed by the injection nozzle during movement of the injection moulding unit in order to divert the blown-out polymer melt.

24. Device according to one of the claims 13 to 23, **characterised in that** the form tool has at least one additional mould cavity which is sealed by a slide, said mould cavity corresponding to an opening provided in the tubular semi-finished product and sealing said opening, and **in that** the slide exposes the additional mould cavity for the access of the polymer melt after the semi-finished product has been formed.

25. Device according to one of the claims 13 to 24, **characterised in that** the form tool has at least one slide which cooperates with the end-side of the semi-finished product, said slide cooperating with an opening on the partially closed end-side of the semi-finished product and sealing an additional mould cavity, and **in that** the slide exposes the additional mould cavity for the access of the polymer melt after the semi-finished product has been formed.

26. Device according to one of the claims 13 to 25, **characterised in that** a nozzle, which is assigned to the partially sealed end wall of the semi-finished product, is disposed in the form tool, to which nozzle further mould cavities are connected via spreaders, and **in that** the nozzle can be brought into the opening position after the semi-finished product has been formed for the access of the displaced polymer melt into the further mould cavities.

27. Use of a device according to one of the claims 13 to 23, for producing hollow cast parts made of metal with an inner coating made of plastic material.

28. Use of a device according to claim 24 or 25, for producing cast parts made of metal with an inner coating and plastic material contours which project externally beyond the cast part.

29. Use of a device according to claim 26 for producing cast parts made of metal with an inner coating made of plastic material and further separate injection moulding parts.

## Revendications

1. Procédé de fabrication d'une pièce moulée à partir d'un composé métal/matière plastique par transformation à haute pression intérieure d'un demi-produit tubulaire en métal pour obtenir une pièce moulée, le demi-produit étant inséré dans un outil de moulage au moins en deux parties présentant un espace de moulage correspondant au contour extérieur de la pièce moulée, l'outil de moulage étant fermé à l'exception des faces frontales du demi-produit ouvertes, le demi-produit étant étanche à la pression au niveau de ses faces frontales et moulé sous haute pression dans l'espace de moulage depuis au moins une face frontale par une masse fondue de polymère pressée par injection dans le demi-produit,
**caractérisé en ce que**
la masse fondue de polymère, après la transformation du demi-produit en pièce moulée, est du moins partiellement déplacée hors de la pièce moulée au moyen d'un fluide amené sous pression inerte par rapport à la masse fondue de polymère en formant une couche intérieure de polymère sur la pièce moulée.

2. Procédé selon la revendication 1,
**caractérisé en ce que**
le fluide est amené selon la technique de pression intérieure de gaz ou d'eau.

3. Procédé selon l'une quelconque des revendications 1 ou 2,
**caractérisé en ce que**
la pièce moulée est refroidie à une température inférieure à la température de fusion du polymère, et la pièce moulée est retirée de l'outil de moulage.

4. Procédé selon l'une quelconque des revendications 1 à 3,
**caractérisé en ce que**
la masse fondue de polymère est soufflée hors de la pièce moulée au moyen d'un fluide.

5. Procédé selon la revendication 4,
**caractérisé en ce que**
la masse fondue de polymère est soufflée au moyen de gaz ou d'eau.

6. Procédé selon l'une quelconque des revendications 1 à 5,
**caractérisé en ce que**
l'outil de moulage est chauffé.

7. Procédé selon l'une quelconque des revendications 1 à 6,
**caractérisé en ce que**
l'injection de la masse fondue de polymère est effectuée au moyen d'un dispositif de coulée par injection conventionnel.

8. Procédé selon la revendication 7,
**caractérisé en ce que**
la face frontale ouverte du demi-produit est rendue étanche au moyen de la filière du dispositif de coulée par injection.

9. Procédé selon la revendication 7 ou 8,
**caractérisé en ce que**
le dispositif de coulée par injection est guidé pendant la transformation selon la progression de la transformation du demi-produit.

10. Procédé selon l'une quelconque des revendications 1 à 9,
**caractérisé en ce que**
le demi-produit tubulaire est muni d'au moins un passage qui à l'intérieur de l'outil de moulage est obturé par un registre, et après la transformation du demi-produit, lors du déplacement de la masse fondue de polymère, une partie de celle-ci est déplacée par retrait du registre dans un espace de moulage dans l'outil de moulage délimité par le registre.

11. Procédé selon l'une quelconque des revendications 1 à 10,
**caractérisé en ce que**
le demi-produit tubulaire, au niveau d'au moins une face frontale, est du moins partiellement obturé et dans la zone de l'obturation au moins un passage est obturé par un registre, et après la transformation du demi-produit, lors du déplacement de la masse fondue de polymère, une partie de celle-ci est déplacée par retrait du registre dans un espace de moulage dans l'outil de moulage délimité par le registre

12. Procédé selon l'une quelconque des revendications 1 à 11,
**caractérisé en ce que**
le demi-produit tubulaire, au niveau d'au moins une face frontale, est obturé par une buse réglable qui pendant la transformation est maintenue en position de fermeture, et la buse est ouverte après la transformation du demi-produit, et la masse fondue de polymère, lors du déplacement hors du demi-produit, est déplacée par la buse dans des espaces de moulage disposés à l'extérieur de l'outil de moulage pour former des pièces coulées par injection séparées.

13. Dispositif de fabrication d'une pièce moulée à partir d'un composé métal/matière plastique par transformation à haute pression intérieure d'un demi-produit tubulaire en métal pour obtenir une pièce moulée, comprenant au moins un outil de moulage au moins en deux parties présentant un espace de moulage correspondant au contour extérieur de la pièce moulée, des étanchéités obturant le demi-produit inséré au niveau de ses faces frontales ouvertes et au moins un dispositif de coulée par injection pouvant être raccordé à une face frontale et poussant une masse fondue de polymère dans le demi-produit, **caractérisé par** un dispositif de pression pouvant être raccordé au niveau d'une face frontale ouverte du demi-produit tubulaire pour générer une pression intérieure pour déplacer la masse fondue de polymère contre la paroi intérieure du demi-produit pendant la transformation.

14. Dispositif selon la revendication 13,
**caractérisé en ce que**
le dispositif de coulée par injection présente une filière rendant étanche la face frontale du demi-produit.

15. Dispositif selon la revendication 13 ou 14,
**caractérisé en ce que**
le dispositif de coulée par injection est déplaçable.

16. Dispositif selon l'une quelconque des revendications 13 à 15,
**caractérisé en ce que**
le dispositif de coulée par injection peut être guidé selon la progression de la transformation du demi-produit.

17. Dispositif selon l'une quelconque des revendications 13 à 16,
**caractérisé en ce que**
l'outil de moulage est chauffé.

18. Dispositif selon l'une quelconque des revendications 13 à 17,
**caractérisé en ce que**
le dispositif de pression est en dispositif à pression intérieure de gaz ou d'eau conventionnel.

19. Dispositif selon l'une quelconque des revendications 13 à 18,
**caractérisé en ce que**
le dispositif de pression est raccordé à la face frontale ouverte du demi-produit située en regard du dispositif de coulée par injection.

20. Dispositif selon l'une quelconque des revendications 13 à 19,
**caractérisé en ce que**
la masse fondue de polymère excédentaire peut être ramenée dans le dispositif de coulée par injection au moyen du dispositif de pression.

21. Dispositif selon la revendication 20,
**caractérisé en ce que**
le dispositif de coulée par injection présente une vis d'extrusion mobile.

22. Dispositif selon l'une quelconque des revendications 13 à 21,
**caractérisé en ce que**
l'outil de moulage, à l'extérieur de la zone occupée par le demi-produit, présente une cavité de moule pouvant être dégagée par la filière lors du déplacement du dispositif d'injection pour recevoir la masse fondue de polymère soufflée.

23. Dispositif selon l'une quelconque des revendications 13 à 22,
**caractérisé en ce que**
l'outil de moulage, à l'extérieur de la zone occupée par le demi-produit, présente une ouverture pouvant être dégagée par la filière lors du déplacement du dispositif de coulée par injection pour évacuer la masse fondue de polymère soufflée.

24. Dispositif selon l'une quelconque des revendications 13 à 23,
**caractérisé en ce que**
l'outil de moulage présente au moins un espace de moulage supplémentaire obturé par un registre, qui est en communication avec un passage prévu dans le demi-produit tubulaire et ferme celui-ci, et le registre, après la transformation du demi-produit, dégage l'espace de moulage supplémentaire pour laisser entrer la masse fondue de polymère.

25. Dispositif selon l'une quelconque des revendications 13 à 24,
**caractérisé en ce que**
l'outil de moulage présente au moins un registre coopérant avec la face frontale du demi-produit, qui coopère avec un passage prévu au niveau de la face frontale partiellement obturée du demi-produit et obture un espace de moulage supplémentaire, et le registre, après la transformation du demi-produit, dégage l'espace de moulage supplémentaire pour faire entrer la masse fondue de polymère.

26. Dispositif selon l'une quelconque des revendications 13 à 25,
**caractérisé en ce que**
dans l'outil de moulage est disposée une buse associée à la paroi frontale du demi-produit partiellement obturée, et à laquelle sont raccordés d'autres espaces de moulage par l'intermédiaire de canaux d'injection, et la buse, après la transformation du demi-produit, peut être placée dans la position d'ouverture pour laisser entrer la masse fondue de polymère dans les autres espaces de moulage.

27. Utilisation d'un dispositif selon l'une quelconque des revendications 13 à 23,
pour la fabrication de pièces moulées creuses en métal avec un revêtement intérieur en matière plastique.

28. Utilisation d'un dispositif selon la revendication 24 ou 25,
pour la fabrication de pièces moulées en métal avec un revêtement intérieur et des contours en matière plastique dépassant la pièce moulée vers l'extérieur.

29. Utilisation d'un dispositif selon la revendication 26,
pour la fabrication de pièces moulées en métal avec un revêtement intérieur en matière plastique et d'autres pièces coulées par injection séparées.
